(19) Europäisches Patentamt
European Patent Office
Office européen des brevets

(11) Veröffentlichungsnummer: **0 326 561 B1**

(12) # EUROPÄISCHE PATENTSCHRIFT

(45) Veröffentlichungstag der Patentschrift:
06.03.91 Patentblatt 91/10

(51) Int. Cl.⁵: **A62D 3/00**

(21) Anmeldenummer: 87906156.2

(22) Anmeldetag: 23.09.87

(86) Internationale Anmeldenummer:
**PCT/DE87/00435**

(87) Internationale Veröffentlichungsnummer:
**WO 88/02269 07.04.88 Gazette 88/08**

(54) **VERFAHREN ZUR IMMOBILISIERUNG VON SCHADSTOFFEN IM BODEN ODER BODENÄHNLICHEN MATERIALIEN.**

(30) Priorität: 24.09.86 DE 3632365

(43) Veröffentlichungstag der Anmeldung:
09.08.89 Patentblatt 89/32

(45) Bekanntmachung des Hinweises auf die
Patenterteilung:
06.03.91 Patentblatt 91/10

(84) Benannte Vertragsstaaten:
AT BE CH DE FR GB IT LI LU NL SE

(56) Entgegenhaltungen:
EP-A- 0 228 626
DE-A- 2 221 031
DE-A- 2 434 879
NL-A- 8 203 415

(73) Patentinhaber: BÖLSING, Friedrich
Danziger Strasse 5
W-3067 Lindhorst (DE)

(72) Erfinder: BÖLSING, Friedrich
Danziger Strasse 5
W-3067 Lindhorst (DE)

(74) Vertreter: Eggert, Hans-Gunther, Dr. et al
Räderscheidtstrasse 1
W-5000 Köln 41 (DE)

**Beschreibung**

Es ist bekannt, Schadstoffe als Verunreinigung im Boden oder bodenähnlichen Materialien natürlicher oder anthropogener Herkunft, wie Hafenschlick, Schlämme und Sedimente aus technischen Anlagen, durch chemische Wechselwirkung mit geeigneten Reaktionspartnern in Stoffe zu überführen, die, aus ökologischer Sicht, sich inert gegenüber der Umwelt verhalten.

Schadstoffe sind organische Verbindungen wie substituierte oder unsubstituierte, gesättigte oder ungesättigte Kohlenwasserstoffe aliphatischer oder aromatischer Natur, mit oder ohne Heteroatomen, wie auch anorganische Verbindungen, die beispielsweise als Kationen, z.B. in Schwermetallverbindungen oder Anionen, z.B. Cyaniden vorliegen, die insgesamt aus ökologischer Sicht ein Gefahrenpotential aufweisen.

Die chemische Wechselwirkung mit geeigneten Reaktionspartnern umfaßt z. B. Adsorption, Oxidation und Reduktion, Ionenaustausch, Komplexierung, Fällung, Kondensation, Polymerisation usw.

Beispiele für eine Überführung eines Schadstoffs mit einem Gefahrenpotential für die Umwelt durch chemische Wechselwirkung mit einem geeigneten Reaktionspartner in einen Stoff, der aus ökologischer Sicht sich gegenüber der Umwelt inert verhält, sind die Polymerisation von Mono- oder Oligomeren im Boden durch Zufuhr von Polymerisationskatalysatoren die Fällung von Schwermetallen in einem Schlick als Hydroxide durch Zufuhr von Hydroxilionen die Adsorption von Schadstoffen in Klärschlämmen, an Sägemehl, Aktivkohle, gemahlene Baumrinde oder ähnlichem. Eine chemische Wechselwirkung ist auch das Lösen des Schadstoffes in einem Lösungsmittel, z.B. von Chlorbenzol in dem durch chemische Reaktion in Calciumhydroxid feinverteilt und als Pulver vorliegenden Bitumen (DCR-pulverisiertes Bitumen). Die Reaktionspartner werden, wie den Beispielen zu entnehmen ist, als wässrige Lösung, als Suspension oder als Feststoff zugegeben.

Diesem Verfahren haften mehrere Nachteile an. Die wässrige Lösung eines Reaktionspartners kann beispielsweise nur unter bestimmten bodenmechanischen Voraussetzungen in einem nassen Boden ihre Wirksamkeit entfalten.

So kann man beispielsweise einen homogenen Sandboden, der mit Schwermetallen verunreinigt ist, unter dem beschriebenen Aspekt dadurch behandeln, daß man ihn mit der wässrigen Lösung eines Sulfids besprüht. Es ist bekannt, daß Schwermetallsulfide praktisch unlöslich sind und sich daher aus ökologischer Sicht inert gegenüber der Umwelt verhalten. Beim Einsickern der Lösung werden praktisch alle Schwermetallionen im Sandboden von dem Reaktionspartner Sulfid-Ion erreicht und als Schwermetallsulfid gefällt.

Sobald der verunreinigte Boden bindige Anteile enthält, d.h. in dem gewählten Beispiel, sobald der Sand von Lehm und Ton durchsetzt ist, sind die darin enthaltenen Schwermetalle einer Reaktion mit dem Sulfid-Ion der wässrigen Lösung entzogen, so daß deren Gefahrenpotential für die Umwelt in vollem Umfange bestehen bleibt.

Hierbei spielt es keine Rolle, ob die Behandlung in situ erfolgt oder nach Verbringung des verunreinigten Bodens in geeignete Mischeinrichtungen, denn auch im letzten Fall bleiben Ton- und Lehmstrukturen in Form plastischer Schollen im Mischvorgang weitestgehend erhalten.

Darüber hinaus besteht die Gefahr, daß die zugesetzten Sulfid-Ionen, die aus den dargelegten Gründen nicht zu den Schwermetallionen gelangen und so ihrerseits nicht abgefangen werden, in das Grundwasser getragen und selbst als Schadstoff mit erheblichem Gefahrenpotential wirksam werden.

Dieses Beispiel ist sinngemäß auf die anderen Verfahren zur Inertisierung von Schadstoffen mit Hilfe geeigneter Reaktionspartner zu übertragen. Sobald das verunreinigte Material lehmige oder tonige Strukturen enthält, versagt das oben beschriebene bekannte Konzept zur Überführung von Schadstoffen in Stoffe, die sich umweltneutral verhalten aus den genannten Gründen, obwohl die chemischen Grundlagen eingehend untersucht wurden. Diese Ausführungen gelten ebenfalls für andere wässrige Zubereitungen, z. B. Suspensionen und Emulsionen. Auch hier kann unter den genannten bodenmechanischen Voraussetzungen keine allumfassende Reaktion zwischen Schadstoff und Reaktionspartner erfolgen.

Für den Fall, daß der chemische Reaktionspartner in Form eines Feststoffes oder einer Feststoffzubereitung, wie z. B. Sägemehl, hydraulische Bindemittel oder ähnlichem einem nassen Boden zugesetzt werden soll, beobachtet man ein Zusammenbacken und Verklumpen des mit Wasser benetzbaren Feststoffes, so daß bereits aus diesem Grunde keine homogene Verteilung der darin enthaltenen eigentlichen Reaktionspartner in dem nassen Boden erfolgen kann. Dies gilt um so mehr, wenn das zu behandelnde Material inhomogen zusammengesetzt ist, d.h. wenn es lehm- oder tonartige Strukturen enthält.

Schließlich besteht ein ganz erheblicher Nachteil darin, daß wässrige Zubereitungen oder Feststoffzubereitungen von Reaktionspartnern oder Reaktionspartnern in Feststoffform, die mit Wasser mischbar bzw. benetzbar sind, beim Einbringen in das nasse zu behandelnde Material einer Auftrennung ihrer Bestandteile unterliegen. Es handelt sich hier um Erscheinungen, die aus der Chromatographie bekannt sind. Auf diese Weise werden die einzelnen Komponenten eines Systems mit Reaktionspartnern voneinander getrennt, so daß sie am Ort des Schadstoffes nicht mehr gemeinsam wirksam werden können.

Um Schwermetalle aus der durch sie verschmutzten Umwelt, insbesondere aus Abwässern, Entlüftungsgasen, verunreinigten Fluß- oder Meerwasser oder verunreinigtem Erdreich zu entfernen, werden nach der DE-A-2 434 879 Thiuramsulfidverbindungen verwendet. Das bedeutet für durch Schwermetalle verseuchte Böden, daß die Schwermetallverbindungen zuvor aus den Böden ausgelaugt und in wässrige Systeme überführt werden müssen, damit sie anschließend als wasserunlösliche Reaktionsprodukte ausgefällt werden können.

Aufgabe der Erfindung ist es daher, ein Verfahren zur Verfügung zu stellen, mit dem die aufgezählten Nachteile nicht auftreten und das geeignet ist, die bekannten chemischen Wechselwirkungen zwischen Schadstoffen und geeignetem Reaktionspartner auch in nassen, inhomogenen, bindigen Strukturen wirksam werden zu lassen, ohne daß eine Beeinflussung der Umwelt durch nicht zur Wechselwirkung gelangte Reaktionspartner eintritt.

Gelöst wird die Aufgabe durch ein Verfahren zur Immobilisierung von Schadstoffen im Boden oder bodenähnlichen Materialien, bei dem man einen zur chemischen Wechselwirkung mit dem Schadstoff unter Bildung eines wasserunlöslichen Reaktionsproduktes befähigten Reaktionspartner in Form einer hydrophoben Feststoffzubereitung in den Boden oder in das bodenähnliche Material einarbeitet.

Unter hydrophober Feststoffzubereitung sind Feststoffe zu verstehen, die mit einem Hydrophobierungsmittel und gegebenenfalls weiteren Hilfsstoffen vorbehandelt wurden.

Geeignete Hydrophobierungsmittel sind bekannt. Vorzugsweise werden solche eingesetzt, die biologisch abbaubar sind, wie z.B. natürliche Fettsäuren, wie Stearinsäure und Palmitinsäure sowie Alkane, z.B. Paraffinöl.

Die Menge an Hydrophobierungsmitteln wird so bemessen, daß nach dem Einmischen der feindispersen hydrophoben Feststoffzubereitung in Böden oder bodenähnlichen Materialien die Reaktionspartner in einer absehbaren Zeitspanne aus den Grenzflächen freigesetzt werden. Sie liegt je nach Hydrophobierungsmitteltyp zwischen 0,1 und 5%, vorzugsweise bei 1%, wenn man als Hydrophobierungsmittel längerkettige Paraffinkohlenwasserstoffe, Alkohole und Carbonsäuren verwendet. Man kann auch anorganische Hydrophobierungsmittel wie Talkum einsetzen ; hier kann der Zusatz bis zu 20% betragen, je nach dem Feststoff, der hydrophobiert werden soll.

Für Zwecke der Erfindung brauchbare Feststoffe sind Stoffe, die von ihrer chemischen Zusammensetzung her dem Boden ohne Nachteil zugemischt werden können. Dabei kann es sich um inerte anorganische Feststoffe wie um feindisperse Kieselsäure, Kalksteinmehl, Calciumhydroxid oder z.B. Silikate, wie Bleicherden oder Bentonit, handeln.

Ferner gibt es zahlreiche organische Stoffe, die als brauchbare Inertstoffe in diesem Zusammenhang eingesetzt werden können, wie gemahlene Borke, Holzmehl, Cellulosepulver, Aktivkohle, makromolekulare synthetische Stoffe, Hartparaffin, Wachse, Polyethylenglykol, Bitumen etc.

Schließlich sind Gemische aus anorganischen und organischen Bestandteilen, wie z.B. gebrauchte Bleicherde aus der Lebensmittelindustrie, einsetzbar.

Vorzugsweise enthält die hydrophobe Feststoffzubereitung das Edukt (Ausgangsmaterial) oder das Reaktionsprodukt einer dispergierenden chemischen Reaktion. Die Dispergierung durch chemische Reaktion – kurz DCR-Verfahren genannt – ist eine auf den Erfinder zurückgehende einfache Methode zur Verteilung von flüssigen Stoffen und Lösungen fester oder flüssiger Stoffe im Verlaufe der Bildung großer Oberflächen durch chemische Reaktion und Gegenstand der deutschen Patente 20 53 627, 23 28 777, 23 28 778, 25 20 999, 25 33 789, 25 33 790, 25 33 791 und ihrer ausländischen Äquivalente. Unter den zahlreichen chemischen Reaktionen, die der Bedingung nach einer Oberflächenvergrößerung im dargelegten Sinne genügen und die daher für eine Verteilung auf chemischem Wege herangezogen werden können, sind insbesondere die Umsetzung von Calciumoxid mit Wasser zu Calciumhydroxid und die Hydrolyse von Aluminiumalkoholaten zu Aluminiumhydroxid zu nennen.

Als Edukt für das DCR-Verfahren wird Calciumoxid in der Form des handelsüblichen Branntkalks, z.B. des Weißfeinkalks bevorzugt. Aber auch grobe Körnungen sind in vielen Fällen brauchbar. Der Branntkalk kann bis zu 18 Gew.% Magnesiumoxid oder andere Fremdbestandteile enthalten.

Wenn man nach dem DCR-Verfahren das Hydrophobierungsmittel, den zur chemischen Wechselwirkung mit dem Schadstoff unter Bildung eines wasserunlöslichen Reaktionsproduktes befähigten Reaktionspartner oder andere Hilfsstoffe in dem Edukt des DCR-Verfahrens vorverteilt und dann die zur Oberflächenvergrößerung führende Reaktion ablaufen läßt, entstehen fein disperse Feststoffzubereitungen, in denen die zugesetzten Verbindungen eine besonders hohe chemische Reaktivität aufweisen.

Wenn Schwermetallsalze als Schadstoff behandelt werden sollen, ist der zur Bildung eines wasserunlöslichen Reaktionsproduktes befähigte Reaktionspartner ein lösliches Sulfid, Hydroxid, Carbonat oder Phosphat. Beispielsweise verwendet man Natrium-oder Calciumsulfid, wobei letzteres nach dem DCR-Verfahren von Schwefel in CaO gebildet sein kann.

In einer bevorzugten Ausführungsform wird deshalb Calciumoxid mit Hydrophobierungsmitteln und den Reaktionspartnern behandelt, z.B. vermahlen, und die so entstandene feindisperse hydrophobe Feststoffzubereitung in den Boden oder die bodenähnliche Materialien eingemischt. In Gegenwart von Wasser reagiert das Calciumoxyd, wegen der Hydrophobierung verzögert, zu Calciumhydroxid, welches alle Zusätze in feindisperser und deshalb hochreaktiver Form enthält.

Chemische Reaktionen der hier beschriebenen Art laufen in wässriger Lösung ab. Es ist deshalb überraschend, daß die in der Feststoffzubereitung enthaltenen Reaktionspartner auch dann im Boden oder in dem bodenähnlichen Material freigesetzt werden, wenn die einzelnen Feststoffpartikelchen hydrophob sind.

Allein durch die Tatsache, daß eine feindisperse Feststoffzubereitung zur Anwendung gelangt, die hydrophobiert ist, wird es möglich, diese auch in nassen Boden bzw. bodenähnliche Materialien einzumischen. Das für die dispergierende Reaktion notwenige Wasser wird aus dem feuchten Boden bezogen. Selbst lehm- und tonhaltiger Boden lassen sich so mit dem Feststoff homogen durchsetzen, wobei jedoch in diesem Falle ein länger anhaltender Mischvorgang erforderlich ist. Das Reaktionswasser kann auch von außen zugegeben oder in Form eines zur Immobilisierung geeigneten Reaktionspartners, z.B. Rotschlamm eingebracht werden.

Das Verhalten der gefällten Schwermetallverbindungen im Boden hängt von der Bodenstruktur, den Bodenbestandteilen, dem pH-Wert und der Temperatur des Bodens ab. Metallsulfide können bei niedrigen pH-Werten mikrobiell zu löslichen Sulfaten oxidiert werden. Selbst wenn man davon ausgeht, daß anfänglich vorhandenes Calciumhydroxid im Laufe der Zeit restlos zu Carbonat umgesetzt werden sollte, besteht auch unter diesen Bedingungen eine Hemmung der mikrobiellen Tätigkeit, die noch dadurch verstärkt werden kann, daß man Wirkstoffe mitdispergiert, die die Tätigkeit der Thiobacillusstämme unterbinden.

In den folgenden Beispielen sind alle Mengenangaben Gewichtsteile.

Beispiel 1 :

1 Teil eines sandigen Bodens, der, bezogen auf die Trockensubstanz, mit etwa 500 000 ppb Hexachlorbenzol kontaminiert war, wurde mit 0,5 Teilen eines Gemisches aus 0,7 Teilen Calciumhydroxid und 0,3 Teilen gebrauchter Bleicherde aus der Pflanzenfett verarbeitenden Industrie, das durch Vermahlen mit 2% eines natürlichen Fettsäuregemisches hydrophobiert wurde, innig vermischt. Probekörper, die jeweils aus 50 g dieses Gemisches unter Verdichtung mit $24,5 \cdot 10^5$ Pa hergestellt wurden, geben bei Auslaugversuchen in einer verfahrensbedingten Anlehnung an Deutsche Einheitsverfahren (DEV) S4 im ersten Versuch noch 0,1 ppb Hexachlorbenzol ab. Dieser Wert geht in drei weiteren Auslaugschritten infolge der Verarmung des Schadstoffs an der Oberfläche des Probekörpers schnell gegen Null.

Anstelle des oben genannten Gemisches kann man dem Boden auch 0,5 Teile eines hydrophoben Reaktionsgemisches aus einer dispergierenden chemischen Reaktion unter Verwendung von 0,5 Teilen Calciumoxid mit 1% desselben Fettsäuregemisches und 0,2 Teilen gebrauchter Bleicherde derselben Herkunft sowie dem 1,5-fachen der stöchiometrisch erforderlichen Wassermenge zumischen. Sofern chlorierte Dibenzodioxine im Boden vorhanden sind, wird in diesem Fall das Wasser für die dispergierende chemische Reaktion mit Vorteil durch die berechnete Menge an Rotschlamm mit einem Wassergehalt von etwa 40% ersetzt.

Beispiel 2 :

1 Teil eines sandigen Bodens, der bezogen auf die Trockensubstanz, mit etwa 500 000 ppb eines Schadstoffgemisches aus Tri- und Tetrachlorbenzolen neben Penta- und Hexachlorbenzol kontaminiert war, wurde mit 0,5 Teilen eines hydrophoben Reaktionsgemisches aus einer dispergierenden chemischen Reaktion unter Verwendung von 0,5 Teilen CaO mit 1% eines natürlichen Fettsäuregemisches und 0,4 Teilen eines geschmolzenen Bitumens vom Typ B 80 sowie dem 1,2-fachen der stöchiometrisch erforderlichen Wassermenge innig vermischt. Probekörper, die aus 50 dieses Gemisches unter Verdichtung mit einem Druck von $24,5 \cdot 10^5$ Pa hergestellt wurden, geben bei Auslaugversuchen in einer verfahrensbedingten Anlehnung an DEV-S4 unter sonst gleichen analytischen Bedingungen keine meßbaren Mengen an Schadstoffen ab.

Anstelle des oben genannten Reaktionsgemisches aus der beschriebenen dispergierenden chemischen Reaktion kann man ein auf mechanischem Wege hergestelltes hydrophobes Gemisch aus derselben Menge desselben Bitumens mit 1,5 Teilen Kalksteinmehl, ggf, unter Zusatz von 1 Teilen einer Flugasche mit hydraulischen Eigenschaften verwenden. Anstelle des Bitumens B 80 können geeignete bituminöse Abfallstoffe treten. Zur Erzielung einer homogenen pulverförmigen Zubereitung kann ggf. die Zugabe weiterer Inertstoffe, z.B. in Form desselben sandigen Bodens, erforderlich sein.

In einer besonders einfachen Verfahrensvariante vermahlt man zunächst Bitumen und/oder geeignete bituminöse Abfallstoffe, ggf, in flüssiger Form mit einem nichtkontaminierten Sand in einem solchen Mengenverhältnis, das eine trocken erscheinende, im Sinne der Aufgabenstellung leicht verarbeitbare Zubereitung entsteht und mischt diese dem kontaminierten sandigen Boden in einem solchen Mengenverhältnis zu, daß ein nach bodenmechanischen Kriterien gut verdichtbares Material entsteht.

Beispiel 3 :

1 Gew.-T. eines bindigen Bodens, der inhomogen mit einigen Prozent eines undefinierbaren Gemisches an Schadstoffen aus der Produktion von unterschiedlichen Pflanzenschutzmitteln verunreinigt ist und der neben anderen Schwermetallen auch organisch gebundenes Quecksilber enthält, wird mit 0,8 Teilen des folgenden Gemisches versetzt :

1 Teil Bitumen B 80 wurde durch chemische Reaktion unter Verwendung von 1 Teil CaO dispergiert und mit 0,4 Teilen Kalksteinmehl versetzt, das mit 5% eines feindispergierten Calciumsulfids angereichert wurde, Nach Verdichtung entsteht ein unter bodenmechanischen Gesichtspunkten stabiler Bodenkörper. Probekörper, die aus 50 g dieses Gemisches unter Verdichtung mit einem Druck von $24,5 \cdot 10^5$ Pa von hergestellt wurden, geben bei Auslaugversuchen in einer verfahrensbedingten Anlehnung an DEV-S4 unter sonst gleichen analytischen Bedingungen und gemessen an Hg und Cu sowie organischen Verbindungen, die Chlor enthalten, keine meßbaren Mengen an Schadstoffen ab.

Zur Überprüfung des Ergebnisses wurde demselben verunreinigten bindigen Boden in Modellansätzen jeweils bis zu einer Konzentration von 1 Mill. ppb Hexachlorbenzol und Hg$^{2+}$ zugegeben, Beide Schadstoffe waren im Auslaugversuch unter sonst gleichen Bedingungen nicht nachweisbar. Dasselbe Ergebnis läßt sich erzielen, wenn man den Schwefel zusammen mit geschmolzenem Bitumen durch chemische Reaktion mit CaO dispergiert und im übrigen sinngemäß verfährt.

Auch in diesem Beispiel läßt sich das Reaktionsgemisch der dispergierenden chemischen Reaktion durch entsprechende, auf mechanischem Wege, z.B. durch Vermahlen, hergestellte Gemische ersetzen.

Beispiel 4 :

Es wird ein Gemisch aus gleichen Teilen hydrophobem CaO, dem 1% Calciumsulfid zugemahlen wurde, und einer gemahlenen Schlacke aus einer Schmelzkammerfeuerunsanlage hergestellt. 0,8 Teile dieses Gemisches werden mit 1 Teil eines durch Zentrifugen vorentwässerten Hafenschlicks innig vermischt, der organische und anorganische Schadstoffe, insbesondere Quecksilber, Arsen, Blei und Cadmium enthält. Nach Beendigung der dispergierenden chemischen Reaktion und nach dem Abkühlen läßt sich das bodenähnliche Reaktionsprodukt unter Verdichtung nach bodenmechanischen Gesichtspunkten einbauen und z.B, im Landschaftsbau nutzen. Probekörper, die aus 50 g dieses Gemisches unter Verdichtung mit einem Druck von $24,5 \cdot 10^5$ Pa hergestellt wurden, geben bei Auslaugversuchen in einer verfahrensbedingten Anlehnung an DEV-S4 im ersten Schritt in der Summe noch bis zu 12 ppm Schwermetalle, insbesondere Blei frei. Mit zunehmender Carbonatisierung der Prüfkörperoberfläche geht die Schwermetallkonzentration schnell gegen Null.

Zu einem entsprechenden Ergebnis gelangt man, wenn man anstelle des handelsüblichen CaO, dieses in Form von Sekundärrohstoffen, z.B. aus Entschwefelungsanlagen, einsetzt oder wenn man das Schlackenmehl durch gebrauchte Bleicherde ersetzt, Wenn man Prüfkörper der beschriebenen Zusammensetzung in eine Isolierschicht aus durch chemische Reaktion in Calciumhydroxid dispergiertem Bitumen, bituminösen Abfallstoffen oder Kunststoffabfällen einbettet, werden unter sonst gleichen analytischen Bedingungen, bereits im ersten Auslaugschritt keine Schwermetalle oder ggf. vorhandene organische Problemstoffe in nachweisbarer Konzentration mehr freigesetzt.

In dem gewählten Beispiel kann man alternativ das genannte vorentwässerte Baggergut zunächst mit schwach hydrophobem CaO oder CaO-haltigen Sekundärrohstoffen konditionieren und dann mit einer hydrophobierten sulfidhaltigen Flugasche und-/oder mit hydrophobiertem Schlackenmehl oder ähnlichen Sekundärrohstoffen mit hydraulischen oder latent hydraulischen Eigenschaften vermischen. In jedem Fall muß das Endprodukt einer jeden Behandlungsvariante zur Vermeidung jeglicher biologischen Aktiviät in den daraus unter Verdichtung hergestellten Bodenkörpern sowie zur spontanen Ausbildung von isolierenden Calciumcarbonatschichten an seinen Grenzflächen zur Umgebung kalkalkalische Komponenten enthalten, die mit dem Kohleldioxid der Luft reagieren können. Die Calciumcarbonatschicht dient zugleich zur Immobilisierung bestimmter Schwermetalle in der Grenzschicht.

**Ansprüche**

1. Verfahren zur Immobilisierung von Schadstoffen in Böden oder bodenähnlichen Materialien durch Umsetzung mit einem zur chemischen Wechselwirkung mit dem Schadstoff unter Bildung eines wasserunlöslichen Reaktionsproduktes befähigten Reaktionspartner, dadurch gekennzeichnet, daß man in einen Boden oder ein bodenähnliches Material mit bindigen Anteilen, insbesondere lehmigen oder tonigen Strukturen, den Reaktionspartner in Form einer hydrophoben Feststoffzubereitung einarbeitet, die durch Vermahlen des Reaktionspartners mit einem Inertstoff und Behandlung mit einem Hydrophobierungsmittel hergestellt wurde, oder die das Edukt oder das Reaktionsprodukt einer dispergierenden chemischen Reaktion enthält, das mit einem Hydrophobierungsmittel vorbehandelt wurde.

2. Verfahren nach Anspruch 1, dadurch gekennzeichnet, daß man eine Feststoffzubereitung verwendet, die durch Umsetzung mit einem organischen, vorzugsweise biologisch abbaubaren, Hydrophobierungsmittel oder einem anorganischen Hydrophobierungsmittel hydrophobiert ist.

3. Verfahren nach Anspruch 1 oder 2, dadurch gekennzeichnet, daß man eine Feststoffzubereitung verwendet, die mit dem hydrophoben Edukt einer dispergierenden chemischen Reaktion hydrophobiert ist.

4. Verfahren nach Anspruch 1 oder 2, dadurch gekennzeichnet, daß man eine Feststoffzubereitung auswählt, die im Verlauf einer chemischen Reaktion hydrophobiert worden ist.

5. Verfahren nach Anspruch 1 oder 2, dadurch gekennzeichnet, daß man eine Feststoffzubereitung auswählt, die den Reaktionspartner in dem Edukt einer dispergierenden chemischen Reaktion enthält.

6. Verfahren nach einem der vorangehenden Ansprüche, dadurch gekennzeichnet, daß man eine Feststoffzubereitung einsetzt, die den Reaktionspartner in dem Reaktionsprodukt einer dispergierenden chemischen Reaktion enthält.

7. Verfahren nach einem der vorangehenden Ansprüche, dadurch gekennzeichnet, daß man eine Feststoffzubereitung auswählt, in der der Reaktionspartner in einem organischen Inertstoff eingebettet ist.

8. Verfahren nach einem der vorangehenden Ansprüche, dadurch gekennzeichnet, daß man als Edukt für die Dispergierung auf chemischem Wege Calciumoxid oder Aluminiumalkoholat verwendet.

9. Verfahren nach einem der vorangehenden Ansprüche, dadurch gekennzeichnet, daß man als Reaktionsprodukt eine solche Verbindung verwendet, die den jeweiligen Schadstoff unter Ausbildung des wasserunlöslichen Reaktionsproduktes löst, fällt, kondensiert, polymerisiert, komplexiert oder addiert.

10. Verfahren nach einem der vorangehenden Ansprüche zur Sanierung von mit Schwermetallsalzen belasteten Böden bzw. bodenähnlichen Materialien, dadurch gekennzeichnet, daß man als Reaktionspartner ein lösliches Sulfid, Hydroxid, Carbonat oder Phosphat auswählt.

11. Verfahren nach einem der vorangehenden Ansprüche, dadurch gekennzeichnet, daß man über die Feststoffzubereitung Hilfsmittel für die Reaktion der Schadstoffe mit den Reaktionspartnern einbringt.

## Claims

1. Process for immobilising harmful substances in soils or soil-like materials by reaction with a reaction partner capable of chemical interaction with the harmful substance, forming a water-insoluble reaction product, characterised in that the reaction partner is worked into a soil or a soil-like material with cohesive constituents, in particular loamy or argillaceous structures, in the form of a hydrophobic solids preparation, which has been produced by grinding the reaction partner with an inert substance and treating it with a water-repellent agent, or which contains the educt or the reaction product of a dispersing chemical reaction which has been pre-treated with a water-repellent agent.

2. Process according to Claim 1, characterised in that a solids preparation is used which is rendered hydrophobic by reacting with an organic, preferably biodegradable, water-repellent agent or an inorganic water-repellent agent.

3. Process according to Claim 1 or 2, characterised in that a solids preparation is used which is rendered hydrophobic with the hydrophobic educt of a dispersing chemical reaction.

4. Process according to Claim 1 or 2, characterised in that a solids preparation is selected which has been rendered hydrophobic in the course of a chemical reaction.

5. Process according to Claim 1 or 2, characterised in that a solids preparation is selected which contains the reaction partner in the educt of a dispersing chemical reaction.

6. Process according to one of the preceding Claims, characterised in that a solids preparation is used which contains the reaction partner in the reaction product of a dispersing chemical reaction.

7. Process according to one of the preceding Claims, characterised in that a solids preparation is selected in which the reaction partner is embedded in an organic inert material.

8. Process according to one of the preceding Claims, characterised in that calcium oxide or aluminium alcoholate is used as the educt for the chemical dispersing.

9. Process according to one of the preceding Claims, characterised in that a compound which dissolves, precipitates, condenses, polymerises, complexes or adds to the relevant harmful substance to form the water-insoluble reaction product is used as the reaction product.

10. Process according to one of the preceding Claims for the sanitation of soils or soil-like materials polluted with heavy metal salts, characterised in that a soluble sulphide, hydroxide, carbonate or phosphate is selected as the reaction partner.

11. Process according to one of the preceding Claims, characterised in that aids for the reaction of the harmful substances with the reaction partners are introduced by means of the solids preparation.

## Revendications

1. Procédé pour immobiliser des substances nocives dans des sols ou dans des matières similaires, par réaction avec un partenaire réactionnel capable d'une interaction chimique avec la substance nocive, avec formation d'un produit réactionnel insoluble dans l'eau, caractérisé en ce qu'on incorpore dans un sol ou dans une matière analogue à un sol contenant des constituants liants, notamment des structures glaiseuses ou argileuses, le partenaire réactionnel sous forme d'une préparation hydrophobe de matière solide qui a été obtenue par broyage du partenaire réactionnel avec une substance inerte et traitement avec un agent conférant le caractère hydrophobe, ou qui contient l'éduit ou le produit d'une réaction chimique de dispersion, qui a été préalablement traité avec un agent conférant le caractère hydrophobe.

2. Procédé suivant la revendication 1, caractérisé en ce qu'on utilise une préparation de matière solide qui est rendue hydrophobe par réaction avec un agent organique conférant le caractère hydrophobe, de préférence susceptible d'une dégradation biologique, ou avec un agent inorganique conférant le caractère hydrophobe.

3. Procédé suivant la revendication 1 ou 2, caractérisé en ce qu'on utilise une préparation de matière solide qui est rendue hydrophobe avec l'éduit hydrophobe d'une réaction chimique de dispersion.

4. Procédé suivant la revendication 1 ou 2, caractérisé en ce qu'on choisit une préparation de matière solide qui a été rendue hydrophobe au cours d'une réaction chimique.

5. Procédé suivant la revendication 1 ou 2, caractérisé en ce qu'on choisit une préparation de matière solide qui contient le partenaire réactionnel dans l'éduit d'une réaction chimique de dispersion.

6. Procédé suivant l'une des revendications précédentes, caractérisé en ce qu'on utilise une préparation de matière solide qui contient le partenaire réactionnel dans le produit d'une réaction chimique de dispersion.

7. Procédé suivant l'une des revendications précédentes, caractérisé en ce qu'on choisit une préparation de matière solide dans laquelle le partenaire réactionnel est noyé dans une matière organique inerte.

8. Procédé suivant l'une des revendications précédentes, caractérisé en ce qu'on utilise l'oxyde de calcium ou un alcoolate d'aluminium comme éduit pour la dispersion par voie chimique.

9. Procédé suivant l'une des revendications précédentes, caractérisé en ce qu'on utilise comme produit de réaction un composé qui dissout, précipite, condense, polymérise, complexe, ou s'additionne avec, la substance nocive concernée, avec formation du produit réactionnel insoluble dans l'eau.

10. Procédé suivant l'une des revendications précédentes, pour l'assainissement de sols ou de matières analogues à un sol chargés de sels de métaux lourds, caractérisé en ce qu'on choisit comme partenaire réactionnel un sulfure, hydroxyde, carbonate ou phosphate soluble.

11. Procédé suivant l'une des revendications précédentes, caractérisé en ce qu'on introduit au moyen de la préparation de matière solide des agents auxiliaires pour la réaction des substances nocives avec les partenaires réactionnels.